# EUROPEAN PATENT SPECIFICATION

(11) **EP 3 037 915 B1**
(45) Date of publication and mention of the grant of the patent: **16.08.2017**
(21) Application number: 14200212.0
(22) Date of filing: 23.12.2014
(51) Int. Cl.: G06F 3/01, G02B 27/34, G06F 3/0484, H04N 21/4728, H04N 21/6587

(54) **Virtual reality content control**
Steuerung von Inhalt der virtuellen Realität
Commande de contenu de réalité virtuelle

(43) Date of publication of application: 29.06.2016
(73) Proprietor: Nokia Technologies OY, 02610 Espoo (FI)
(72) Inventor: Leppänen, Jussi Artturi, 33580 Tampere (FI); Eronen, Antti Johannes, Tampere (FI)
(74) Representative: Swindell & Pearson Limited

(56) References cited:
- WO-A1-2013/036237
- WO-A1-2013/095416
- US-A1- 2006 256 133
- US-A1- 2010 079 508

## Description

### TECHNOLOGICAL FIELD

Embodiments of the present invention relate to controlling advancement of virtual reality content. Such virtual reality content may be viewed, for example, using a head-mounted viewing device.

### BACKGROUND

Virtual reality provides a computer-simulated environment that simulates a viewer's presence in that environment. A viewer may, for example, experience a virtual reality environment using a head-mounted viewing device that comprises a stereoscopic display.

WO 2013/036237 discloses a method comprising detecting what a user is looking at on a display screen and responding by modifying the playback of audio or visual media.

US 2006/0256133 discloses a system which determines whether a user's gaze falls within a predetermined spatial boundary of an advertisement display area and plays a video-based advertisement in response to such a determination.

US 2010/0079508 discloses an electronic device which has gaze detection capabilities that allow the device to detect when a user is looking at the device.

WO 2013/095416 discloses a processor which determines the characteristics of a user interaction with a scene of a streaming video and responds.

### BRIEF SUMMARY

According to various, but not necessarily all, embodiments of the invention there is provided a method, comprising: determining at least a first region of interest at a first time in visual virtual reality content that is configured to extend beyond a viewer's field of view when viewing the visual virtual reality content; monitoring, while a viewer is viewing the visual virtual reality content, whether a defined proportion of the viewer's field of view coincides with the first region of interest in the visual virtual reality content; controlling advancement of the visual virtual reality content based on whether the defined proportion of the viewer's field of view coincides with the determined first region of interest in the visual virtual reality content; determining a new second region of interest, positioned outside the viewer's field of view while the viewer is viewing the visual virtual reality content, at a second time in the visual virtual reality content; determining, while the viewer is viewing the visual virtual reality content, that the defined proportion of the viewer's field of view does not coincide with the new second region of interest in the visual virtual reality content; and ceasing advancement of at least a portion of the visual virtual reality content, comprising the new second region of interest, based on the determination that the defined proportion of the viewer's field of view does not coincide with the new second region of interest in the visual virtual reality content.

According to various, but not necessarily all, embodiments of the invention there is provided computer program code that, when performed by at least one processor, causes at least the following to be performed: determining at least a first region of interest at a first time in visual virtual reality content that is configured to extend beyond a viewer's field of view when viewing the visual virtual reality content; monitoring, while a viewer is viewing the visual virtual reality content, whether a defined proportion of the viewer's field of view coincides with the first region of interest in the visual virtual reality content; controlling advancement of the visual virtual reality content based on whether the defined proportion of the viewer's field of view coincides with the determined first region of interest in the visual virtual reality content; determining a new second region of interest, positioned outside the viewer's field of view while the viewer is viewing the visual virtual reality content, at a second time in the visual virtual reality content; determining, while the viewer is viewing the visual virtual reality content, that the defined proportion of the viewer's field of view does not coincide with the new second region of interest in the visual virtual reality content; and ceasing advancement of at least a portion of the visual virtual reality content, comprising the new second region of interest, based on the determination that the defined proportion of the viewer's field of view does not coincide with the new second region of interest in the visual virtual reality content.

The computer program code may be provided by a computer program. The computer program may be stored on a non-transitory computer-readable medium.

According to various, but not necessarily all, embodiments of the invention there is provided an apparatus, comprising: means for determining at least a first region of interest in visual virtual reality content that is configured to extend beyond a viewer's field of view when viewing the visual virtual reality content; means for monitoring, while a viewer is viewing the visual virtual reality content, whether a defined proportion of a viewer's field of view coincides with the first region of interest in the visual virtual reality content; and means for controlling advancement of the visual virtual reality content based on whether the at least a defined portion of the viewer's field of view coincides with the determined at least one region of interest in the visual virtual reality content; means for determining a new second region of interest, positioned outside the viewer's field of view while the viewer is viewing the visual virtual reality content, at a second time in the visual virtual reality content; means for determining, while the viewer is viewing the visual virtual reality content, that the defined proportion of the viewer's field of view does not coincide with the new second region of interest in the visual virtual reality content; and means for ceasing advancement of at least a portion of the visual virtual reality content, comprising the new second region of interest, based on the determination that the defined proportion of the viewer's field of view does not coincide with the new second region of interest in the visual virtual reality content proportion of a viewer's field of view coincides with the at least one region of interest identified by the at least one identifier.

According to various, but not necessarily all, embodiments of the invention there is provided examples as claimed in the appended claims.

### BRIEF DESCRIPTION

For a better understanding of various examples described in the detailed description, reference will now be made by way of example only to the accompanying drawings in which:
Fig 1 illustrates a first apparatus in the form of a chip or a chip-set;
Fig 2 illustrates a second apparatus in the form of an electronic device which comprises the first apparatus illustrated in Fig 1;
Fig 3 illustrates a third apparatus in the form of a chip/chip-set;
Fig 4 illustrates a fourth apparatus in the form of an electronic device that comprises the apparatus illustrated in Fig 3;
Fig 5 illustrates a flow chart of a first method performed by the first and/or second apparatus;
Fig 6 illustrates a flow chart of a second method performed by the third and/or fourth apparatus;
Figs 7 and 8 illustrate schematics in which virtual reality content is being created;
Fig 9 illustrates a region of interest at a first time in visual virtual reality content;
Fig 10 illustrates multiple regions of interest at a second time in the visual virtual reality content;
Fig 11 illustrates a region of interest at a third time in the visual virtual reality content;
Figs 12A and 12B illustrate two different examples of a defined proportion of a field of view of a viewer;
Fig 13 illustrates a schematic of a viewer viewing the visual virtual reality content at the first time in the visual virtual reality content, as schematically illustrated in Fig 9;
Fig 14 illustrates a viewer viewing the visual virtual reality content at the third time in the visual virtual reality content, as schematically illustrated in Fig 11; and
Fig 15 schematically illustrates the viewer viewing the visual virtual reality content at the third time in the visual virtual reality content, as schematically illustrated in Fig 11, where the user has moved his field of view relative to Fig 14.

### DETAILED DESCRIPTION

Embodiments of the invention relate to controlling advancement of visual virtual reality content based on whether at least a defined proportion of a user's field of view coincides with at least one pre-defined region of interest in the visual virtual reality content.

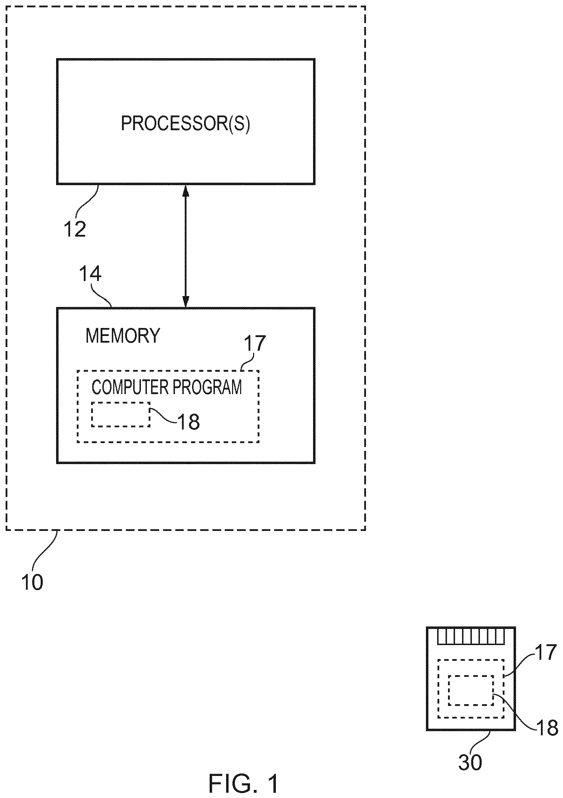

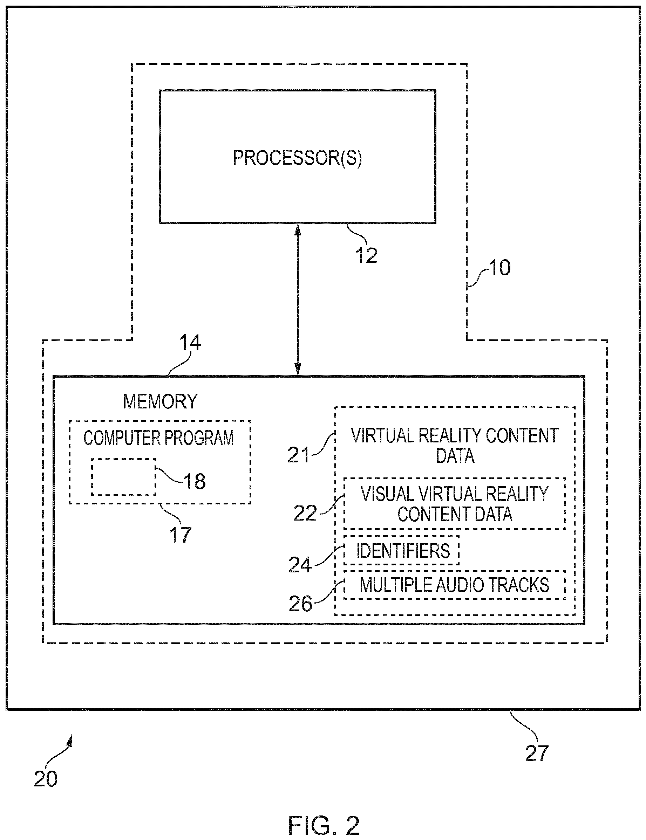

Fig 1 illustrates an apparatus 10 that may be a chip or a chip-set. The apparatus 10 may form part of a computing device such as that illustrated in Fig 2.

The apparatus 10 comprises at least one processor 12 and at least one memory 14. A single processor 12 and a single memory 14 are shown in Fig 1 and discussed below merely for illustrative purposes.

The processor 12 is configured to read from and write to the memory 14. The processor 12 may comprise an output interface via which data and/or commands are output by the processor 12 and an input interface via which data and/or commands are input to the processor 12.

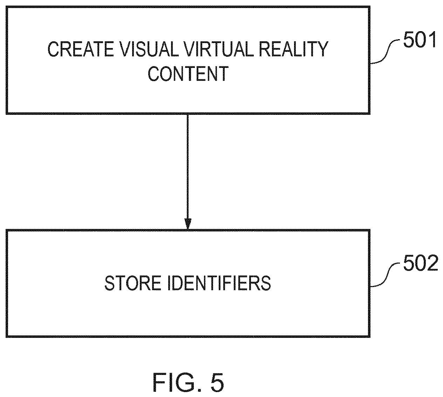

The memory 14 is illustrated as storing a computer program 17 which comprises computer program instructions/code 18 that control the operation of the apparatus 10 when loaded into the processor 12. The processor 12, by reading the memory 14, is able to load and execute the computer program code 18. The computer program code 18 provides the logic and routines that enable the apparatus 10 to perform the methods illustrated in Fig 5 and described below. In this regard, the processor 12, the memory 14 and the computer program code 18 provide means for performing the methods illustrated in Fig 5 and described below.

Although the memory 14 is illustrated as a single component in Fig 1, it may be implemented as one or more separate components, some or all of which may be integrated and/or removable and/or may provide permanent/semi-permanent dynamic/cached storage.

The computer program code 18 may arrive at the apparatus 10 by any suitable delivery mechanism 30. The delivery mechanism 30 may be, for example, a non-transitory computer-readable storage medium such as an optical disc or a memory card. The delivery mechanism 30 may be a signal configured to reliably transfer the computer program code 18. The apparatus 10 may cause propagation or transmission of the computer program code 18 as a computer data signal.

Fig 2 illustrates a second apparatus 20 in the form of a computing device which comprises the first apparatus 10. The second apparatus 20 may, for example, be a personal computer.

In the example illustrated in Fig 2, the processor 12 and the memory 14 are co-located in a housing/body 27. The second apparatus 20 may further comprise a display and one or more user input devices (such as a computer mouse), for example.

The elements 12 and 14 are operationally coupled and any number or combination of intervening elements can exist between them (including no intervening elements).

In Fig 2, the memory 14 is illustrated as storing virtual reality content data 21. The virtual reality content data 21 may, for example, comprise audiovisual content in the form of a video (such as a movie) or a video game. The virtual reality content data 21 provides virtual reality content that may, for example, be experienced by a viewer using a head-mounted viewing device. The virtual reality content data 21 comprises visual virtual reality content data 22, a plurality of identifiers 24 and multiple audio tracks 26.

The visual virtual reality content data 22 provides visual virtual reality content. The visual virtual reality content might be stereoscopic content and/or panoramic content which extends beyond a viewer's field of view when it is viewed. In some examples, the visual virtual reality content is 360° visual virtual reality content in which a viewer can experience a computer-simulated virtual environment in 360°. In some other examples, the visual virtual reality content might cover less than the full 360° around the viewer, such as 270° or some other amount. In some implementations, the visual virtual reality content is viewable using a head-mounted viewing device and a viewer can experience the computer-simulated virtual environment by, for example, moving his head while he is wearing the head-mounted viewing device. In other implementations, the visual virtual reality content is viewable without using a head-mounted viewing device.

In some implementations, the visual virtual reality content data 22 might include different parts which form the visual virtual reality content data 22. Different parts of the data 22 might have been encoded separately and relate to different types of content. The different types of content might be rendered separately. For instance, one or more parts of the data 22 might have been encoded to provide visual background/scenery content, whereas one or more other parts of the data 22 might have been encoded to provide foreground/moving object content. The background/scenery content might be rendered separately from the foreground/moving object content.

The identifiers 24 identify pre-defined regions of interest in the visual virtual reality content data. The identifiers 24 are for use in controlling advancement of the visual virtual reality content. This will be described in further detail later.

The multiple audio tracks 26 provide audio which accompanies the visual virtual reality content. Different audio tracks may provide the audio for different virtual regions of the (360°) environment simulated in the visual virtual reality content. Additionally, some audio tracks may, for example, provide background/ambient audio whereas other audio tracks may provide foreground audio that might, for example, include dialogue.

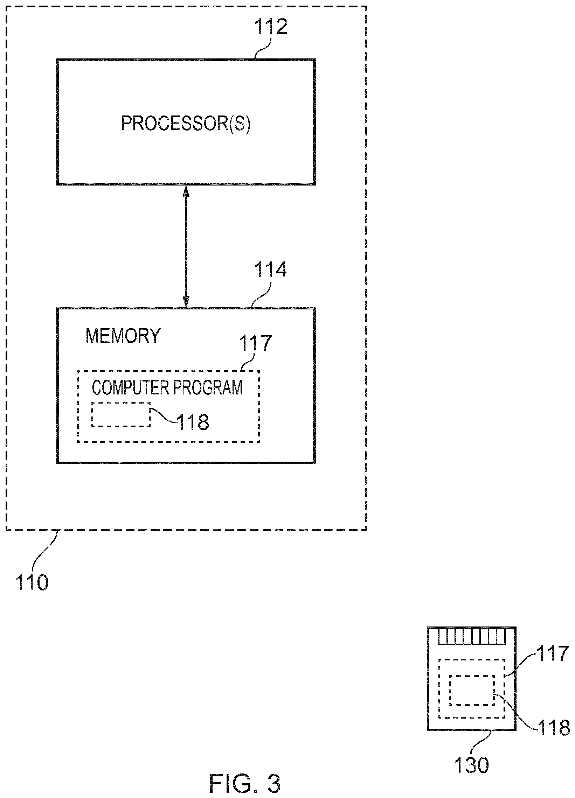

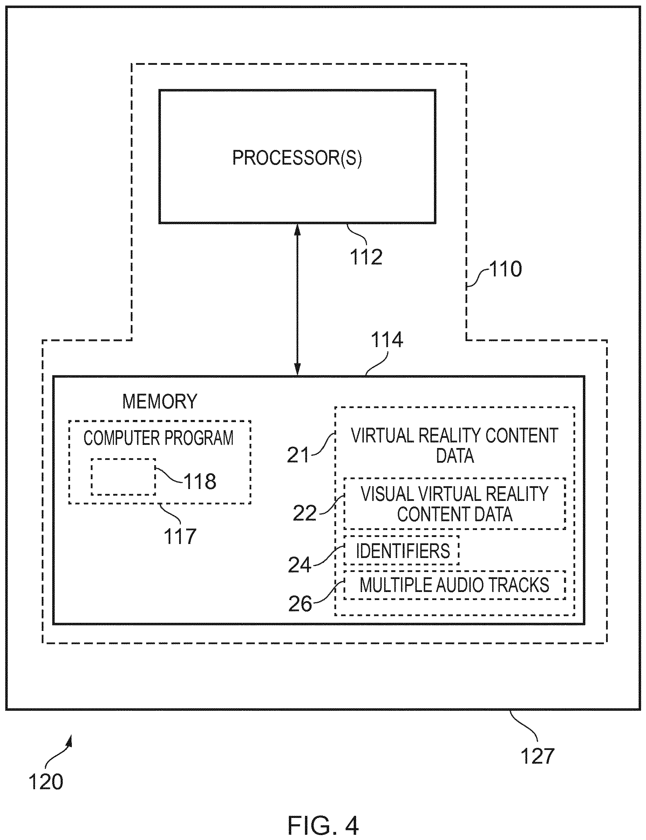

Fig 3 illustrates a third apparatus 110 that may be a chip or a chip-set. The third apparatus 110 may form part of a computing device such as that illustrated in Fig 4.

The apparatus 110 comprises at least one processor 112 and at least one memory 114. A single processor 112 and a single memory 114 are shown in Fig 3 and discussed below merely for illustrative purposes.

The processor 112 is configured to read from and write to the memory 114. The processor 112 may comprise an output interface via which data and/or commands are output by the processor 112 and an input interface via which data and/or commands are input to the processor 112.

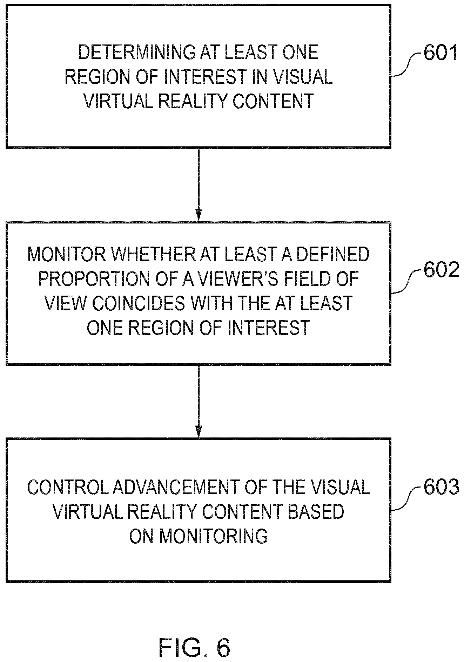

The memory 114 is illustrated as storing a computer program 117 which comprises the computer program instructions/code 118 that control the operation of the apparatus 110 when loaded into the processor 112. The processor 112, by reading the memory 114, is able to load and execute the computer program code 118. The computer program code 118 provides the logic and routines that enable the apparatus 110 to perform the methods illustrated in Fig 6 and described below. In this regard, the processor 112, the memory 114 and the computer program code 118 provide means for performing the methods illustrated in Fig 6 and described below.

Although the memory 114 is illustrated as a single component in Fig 3, it may be implemented as one or more separate components, some or all of which may be integrated/removable and/or may provide permanent/semi-permanent dynamic/cached storage.

The computer program code 118 may arrive at the apparatus 110 via any suitable delivery mechanism 130. The delivery mechanism 130 may be, for example, a non-transitory computer-readable storage medium such as an optical disc or a memory card. The delivery mechanism 130 may be a signal configured to reliably transfer the computer program code 118. The apparatus 110 may cause the propagation or transmission of the computer program code 118 as a computer data signal.

Fig 4 illustrates a fourth apparatus 120 in the form of a computing device which comprises the third apparatus 110. In some implementations, the apparatus 120 is configured to connect to a head-mounted viewing device. In those implementations, the apparatus 120 may, for example, be a games console or a personal computer. In other implementations, the apparatus 120 may be a head-mounted viewing device or a combination of a games console/personal computer and a head-mounted viewing device.

In the example illustrated in Fig 4, the memory 114 is illustrated as storing the virtual reality content data 20 explained above. The processor 112 and the memory 114 are co-located in a housing/body 127.

The elements 12 and 14 are operationally coupled and any number or combination of intervening elements can exist between them (including no intervening elements).

A head-mounted viewing device may comprise a stereoscopic display and one or more motion sensors. The stereoscopic display comprises optics and one or more display panels, and is configured to enable a viewer to view the visual virtual reality content stored as the visual virtual reality content data 22. The one or more motion sensors may be configured to sense the orientation of the head-mounted display device in three dimensions and to sense motion of the head-mounted display device in three dimensions. The one or more motion sensors may, for example, comprise one or more accelerometers, one or more magnetometers and/or one or more gyroscopes.

A head-mounted viewing device may also comprise headphones or earphones for conveying the audio in the audio tracks 26 to a user/viewer. Alternatively, the audio in the audio tracks 26 may be conveyed to a user/viewer by separate loudspeakers.

A first example of a first method according to embodiments of the invention will now be described in relation to Fig 5.

In the first example of the first method, at block 501 in Fig 5, virtual reality content is created and stored as virtual reality content data 21. The visual aspect is stored as visual virtual reality content data 22 and the audible aspect is stored as multiple audio tracks 26.

At block 502 in Fig 5, a user provides user input at the second apparatus 20 identifying various regions of interest in the visual virtual reality content data 22 in the memory 14 of the second apparatus 20. The user input causes the processor 12 of the second apparatus 20 to store identifiers 24 in the virtual reality content data 21 which identify those regions of interest in the visual virtual reality content data 22.

The stored identifiers 24 identify different regions of interest in the visual virtual reality content at different times in the visual virtual reality content. The identification of regions of interest in the visual virtual reality content enables advancement of the visual virtual reality content to be controlled when it is consumed. This is described below in relation to Fig 6.

A first example of a second method according to embodiments of the invention will now be described in relation to Fig 6.

In this first example of the second method, the virtual reality content data 21 stored in the memory 14 of the second apparatus 20 is provided to the fourth apparatus 120 illustrated in Fig 4. In some implementations of the invention, the virtual reality content data 21 may be stored on a server and downloaded or streamed to the fourth apparatus 120. In other implementations, the virtual reality content data 21 may be provided to the fourth apparatus 120 by an optical disc or a memory card, for example.

At block 601 in Fig 6, a viewer is consuming the virtual reality content provided by the virtual reality content data 21. For instance, he may be consuming the virtual reality content via a head-mounted viewing device. The processor 112 of the fourth apparatus 120 causes and enables the viewer to consume the virtual reality content. As explained above, the fourth apparatus 120 may be the head-mounted viewing device or a computing device that is connected to the head-mounted viewing device, such as a games console or a personal computer, or it may be a combination of the two.

At block 601 in Fig 6, the processor 112 of the apparatus 120 analyses the visual virtual reality content data 22 and determines that there is at least one region of interest in the visual virtual reality content (provided by the visual virtual reality content data 22) that forms part of the virtual reality content being consumed by the user. The at least one region of interest has been pre-defined (in the manner described above in relation to Fig 5) and is identified by at least one of the identifiers 24 which forms part of the virtual reality content data 21.

At block 602 in Fig 6, the processor 112 of the fourth apparatus 120 monitors whether at least a defined proportion of a viewer's field of view coincides with the determined at least one region of interest in the visual virtual reality content. In some implementations, the processor 112 begins to monitor the position and orientation of the defined proportion of the viewer's field of view before a region of interest has been determined. In other implementations, this monitoring only commences after a region of interest has been identified by the processor 112.

The viewer's total field of view when viewing visual virtual reality content may depend upon the head-mounted viewing device that is being used to view the visual virtual reality content and, in particular, the optics of the visual virtual reality content.

In some implementations, the "defined proportion" of the viewer's field of view may be the viewer's total field of view when viewing the visual virtual reality content.

For instance, if the viewer's total field of view when viewing the visual virtual reality content is 100° in a transverse plane, then in such implementations the defined proportion of the viewer's field of view encompasses the whole 100°.

In other implementations, the defined proportion of the viewer's field of view might be less than the viewer's total field of view when viewing the visual virtual reality content. For example, the defined proportion could be much less than the viewer's total field of view, such as the central 20° of the viewer's field of view in a transverse plane, when the viewer's total field of view is 100° in the transverse plane. Alternatively, the defined proportion could now be a single viewing line within the viewer's field of view, such as a line situated at the center of the viewer's field of view.

At block 603 in Fig 6, the processor 112 of the fourth apparatus 120 controls advancement of the visual virtual reality content based on whether the at least a defined proportion of the viewer's field of view coincides with the determined at least one region of interest in the visual virtual reality content. In some implementations, if the processor 112 determines that the defined proportion of the viewer's field of view coincides with the at least one region of interest in the visual virtual reality content, it enables the advancement of the visual virtual reality content. For instance, if the visual virtual reality content is a video (such as a movie), it enables playback of the video to continue. If the visual virtual reality content is a video game, it enables the video game to advance.

Alternatively, if the defined proportion of the viewer's field of view does not coincide with the determined at least one region of interest in the visual virtual reality content, the processor 112 may cease advancement of at least a portion of the visual virtual reality content. For instance, if the visual virtual reality content is a video (such as a movie), the processor 112 may pause the whole or a region of the visual virtual reality content (such as a region containing the determined at least one region of interest) until the defined proportion of the viewer's field of view and the determined at least one region of interest begin to coincide. Similarly, if the visual virtual reality content is a video game, the processor 112 may cease advancement of at least a portion of the video game (such as a region containing the determined at least one region of interest) until a defined proportion of the viewer's field of view begins to coincide with the determined at least one region of interest.

In implementations where different parts (such as the foreground/moving objects and the background/scenery) are rendered separately, the portion that is ceased might be the foreground/moving objects and the background/scenery might continue to move/be animated. For instance, leaves might move and water might ripple. The movement/animation might be looped.

In addition to the above, the processor 112 may control advancement of audio based upon whether the defined proportion of the viewer's field of view coincides with at least one determined region of interest. For instance, it may pause one or more audio tracks if the defined proportion of the viewer's field of view does not coincide with the determined at least one region of interest. It may recommence playback of that/those audio track(s) if and when the defined proportion of the viewer's field of view begins to coincide with the determined at least one region of interest. The paused/recommended audio track(s) may include audio that is intended to be synchronized with events in a portion of the visual virtual reality content where advancement has been ceased. The paused/recommenced audio track(s) could be directional audio from the determined at least one region of interest. The paused/recommenced audio track(s) could, for example, include dialog from one or more actors in the determined region of interest or music or sound effects.

In some implementations, the processor 112 may enable playback of one or more audio tracks to continue or commence while playback of one or more other audio tracks has been paused. The other audio track(s) could include ambient music or sounds of the environment, for example. The other audio track(s) could be looped in some implementations.

Controlling advancement of visual virtual reality content based on whether a defined proportion of a viewer's field of view coincides with one or more predefined regions of interest is advantageous because it provides a mechanism for preventing a viewer from missing important parts of visual virtual reality content. For example, it may prevent a viewer from missing salient plot points in visual virtual reality content by pausing at least part of the visual virtual reality content until the viewer's field of view is in an appropriate position. The viewer is therefore able to explore a virtual environment fully without concern that he may miss important plot points.

A second example of the first method according to embodiments of the invention will now be described in relation to Figs 5, 7 and 8.

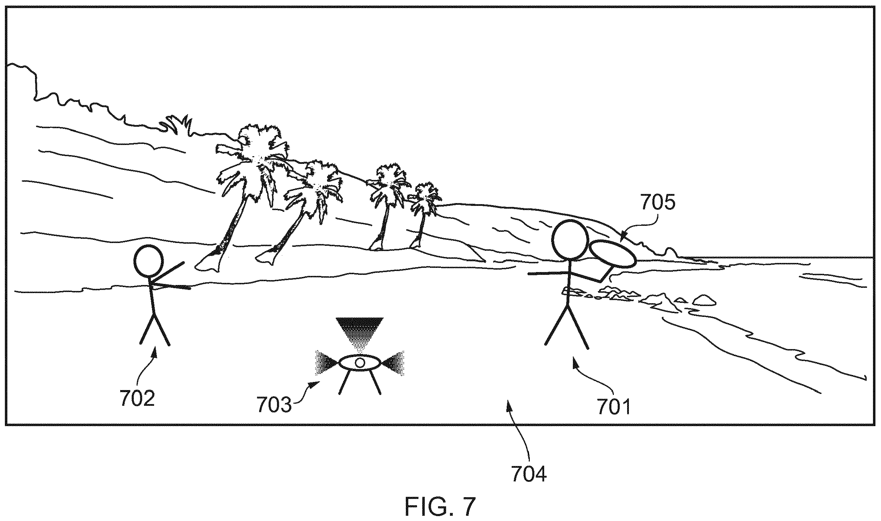

Fig 7 illustrates a schematic in which (visual and audible) virtual reality content is being recorded by one or more virtual reality content recording devices 703. The virtual reality content may be professionally recorded content, or content recorded by an amateur. The virtual reality content recording device(s) 703 are recording both visual and audible content. In the scene being recorded, a first actor 701 and a second actor 702 are positioned on a beach 704. The first actor 701 throws a ball 705 to the second actor 702.

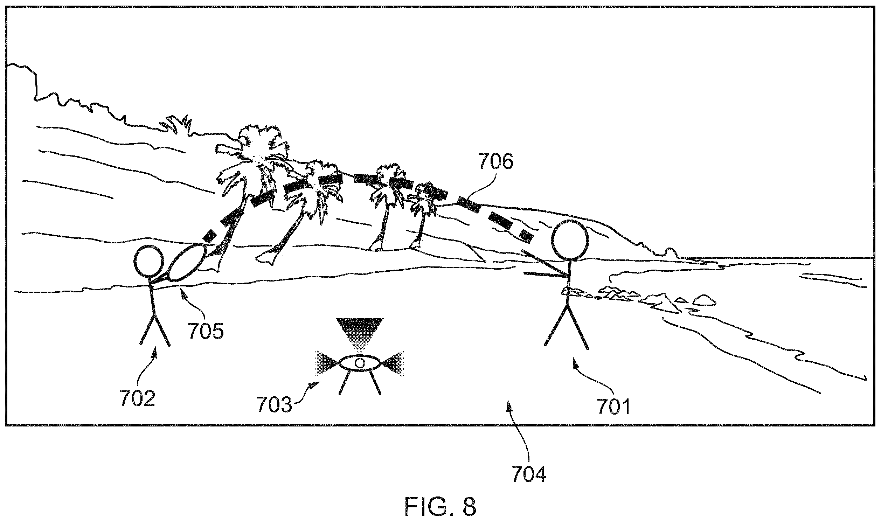

Fig 7 illustrates the scene at a first time where the first actor 701 has not yet thrown the ball 705 to the second actor 702. Fig 8 illustrates the scene at a point in time where the ball 705 has been caught by the second actor 702. The dotted line designated by the reference numeral 706 represents the motion of the ball 705.

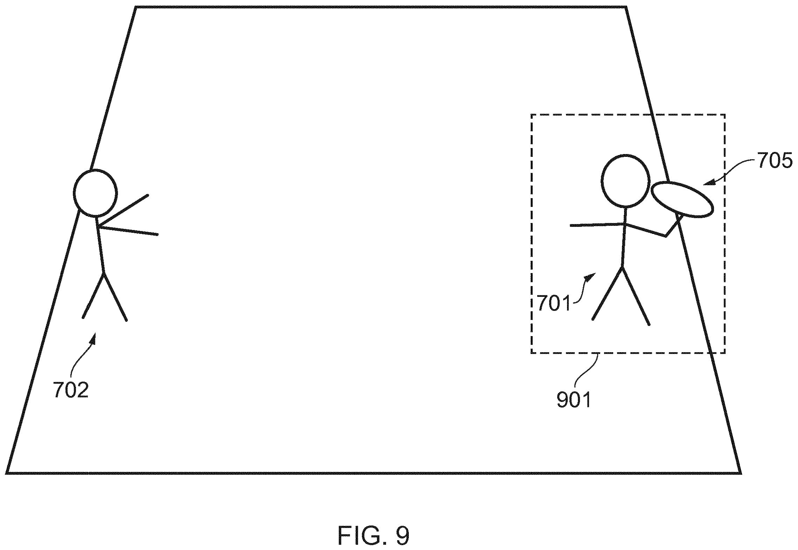

Fig 9 illustrates the visual virtual reality content provided by visual virtual reality content data 22 which is created by the virtual reality content creation device(s) 703 when the scene is captured in Figs 7 and 8. A director of the movie chooses to identify the first actor 701 and the ball 705 as a region of interest 901. He provides appropriate user input to the second apparatus 120 and, in response, the processor 12 of the second apparatus 20 creates and stores an identifier which identifies the region of interest 901 in the virtual reality content data 21, at the first time in the playback of the visual virtual reality content which is depicted in Fig 9.

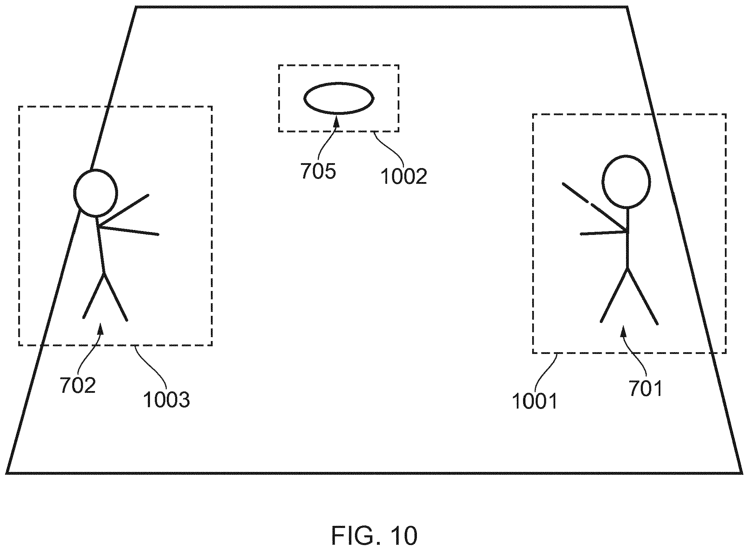

Fig 10 illustrates a second time in the visual virtual reality content, which is subsequent to the first time. At the second time, the first actor 701 has thrown the ball 705 to the second actor 702, but the ball 705 has not yet reached the second actor 702. The director of the movie decides to identify the first actor 701 as a first region of interest 1001, the ball 705 as a second region of interest 1002 and the second actor 702 as a third region of interest 1003 for the second time in the visual virtual reality content. The director provides appropriate user input to the second apparatus 120 and, in response, the processor 112 creates and stores identifiers 24 in the memory 14 which identify the regions of interest 1001, 1002 and 1003 in the visual virtual reality content data 22 at the second time in the playback of the visual virtual reality content.

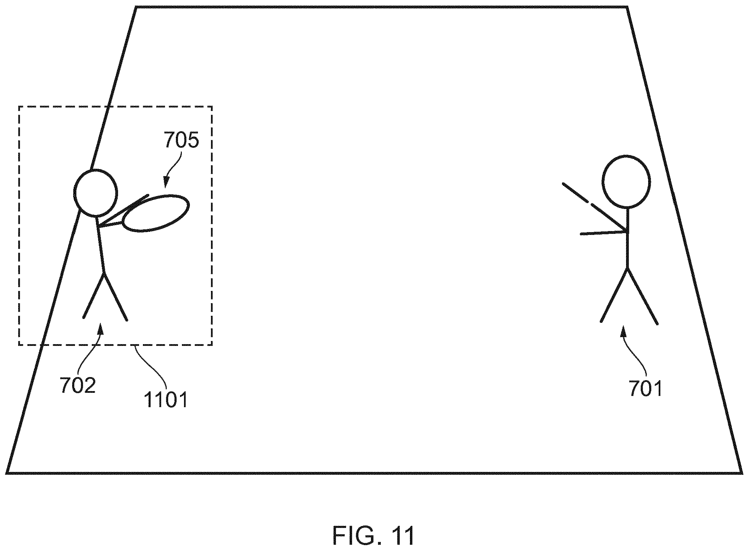

Fig 11 illustrates the visual virtual reality content at a third time, subsequent to the first and second times. At the third time, the second actor 702 has caught the ball 705. The director of the movie decides that he wishes to identify the second actor 702 and the ball 705 as a region of interest 1101 and provides appropriate user input to the second apparatus 120. In response, the processor 112 of the second apparatus 120 creates and stores an identifier identifying the region of interest 1101 in the visual virtual reality content at the third time in the playback of the visual virtual reality content.

In some implementations, the regions of interest may not be identified by a user manually providing user input. Alternatively, the regions of interest may be identified automatically by image analysis performed by the processor 12, and the corresponding identifiers may be created and stored automatically too.

A second example of the second method according to embodiments of the invention will now be described in relation to Figs 6 and 12A to 15.

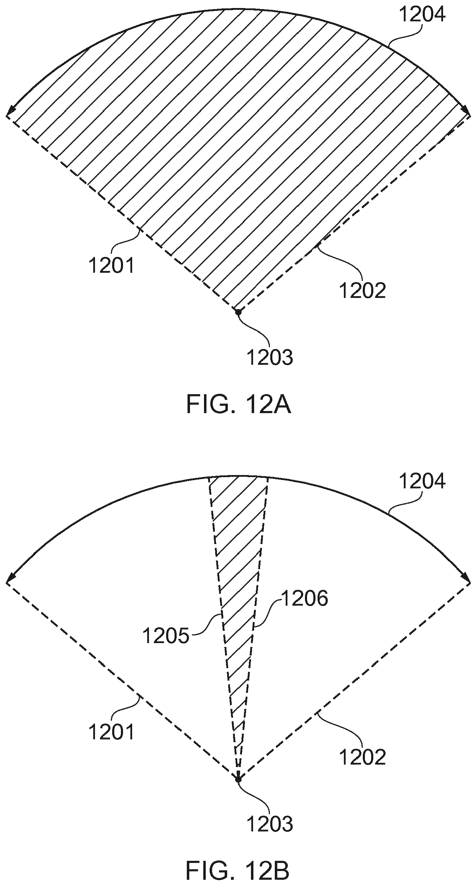

Fig 12A illustrates a first example of a defined proportion of a field of view of a viewer in a transverse plane. In the example illustrated in Fig 12A, the viewing position of the viewer is designated by the point labeled with reference number 1203. A first dotted line 1201 illustrates a first extremity of a viewer's field of view in the transverse plane and a second dotted line 1202 designates a second extremity of a viewer's field of view in the transverse plane. The curved arrow labeled with the reference number 1204 designates a third extremity of the viewer's field of view in the transverse plane. The area bound by the lines 1201, 1202 and 1204 represents the area that is viewable by the viewer in the transverse plane, when viewing visual virtual reality content (for instance, via a head-mounted viewing device).

In the first example, the cross-hatching in Fig 12A indicates that the whole of the viewer's field of view, when viewing the visual virtual reality content (for instance, via a head-mounted viewing device), is considered to be the "defined proportion" of that field of view.

A human's real-life field of view may be almost 180° in a transverse plane. The total field of view of a viewer while viewing the visual virtual reality content may be the same or less than a human's real-life field of view.

Fig 12B illustrates a second example of a defined proportion of a field of view of a viewer. In this example, the area between the first dotted line labeled with reference number 1201, the dotted lined labeled with the reference number 1202 and the curved arrow labeled with the reference numeral 1204 represents the area that is viewable by a viewer in a transverse plane, when viewing visual virtual reality content, as described above. However, the example illustrated in Fig 12B differs from the example illustrated in Fig 12A in that the "defined proportion" of the field of view of the viewer is less than the total field of view of the viewer when viewing visual virtual reality content. In this example, the defined proportion of the field of view of the viewer is the angular region between the third and fourth dotted lines labeled with the reference numerals 1205 and 1206 and is indicated by cross-hatching. It encompasses a central portion of the field of view of the viewer. In this example, the defined proportion of the field of view could be any amount which is less than the total field of view of the viewer when viewing visual virtual reality content.

It will be appreciated that Figs 12A and 12B provide examples of a defined proportion of a field of view of a viewer in a transverse plane for illustrative purposes. In practice, the processor 112 may also monitor whether a defined proportion of the viewer's field of view in a vertical plane coincides with a region of interest. The processor 112 may, for example, determine a solid angle in order to determine whether a defined proportion of a viewer's field of view coincides with a region of interest in visual virtual reality content.

In monitoring whether a defined proportion of a viewer's field of view coincides with a region of interest in visual virtual reality content, the processor 112 might be configured to determine a viewer's viewpoint (for instance, by tracking a viewer's head) and configured to determine whether a (theoretical) line, area or volume emanating from the viewer's viewpoint intersects the region of interest.

In some implementations, the processor 112 may be configured to monitor whether a defined proportion of a viewer's field of view coincides with a region of interest in visual virtual reality content by using one or more cameras to track a viewer's gaze. This might be the case in implementations in which the virtual reality content is viewed using a head-mounted viewing device and in implementations where it is not. If a head-mounted viewing device is not used, the visual virtual reality content could, for instance, be displayed on one or more displays surrounding the viewer.

In implementations where a viewer's gaze is tracked, if the visual virtual reality content is stereoscopic, the processor 112 may be configured to determine the depth of the region(s) of interest and determine the depth of a viewer's gaze. The processor 112 may be further configured to monitor whether at least a defined proportion of a viewer's field of view coincides with the determined region(s) of interest by comparing the depth of the viewer's gaze with the depth of the region(s) of interest.

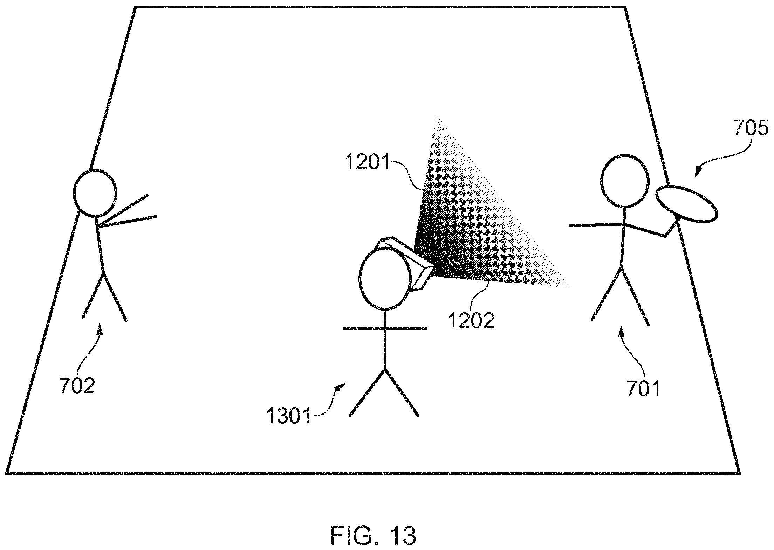

Figs 13 to 15 illustrate a schematic of a viewer viewing the visual virtual reality content that was shown being recorded in Figs 7 and 8 and which includes the identifiers which were created and stored as described above and illustrated in Figs 9 to 11.

In this second example of the second method, the processor 112 may be continuously cycling through the method illustrated in Fig 6. This is described in detail below.

Playback of the visual virtual reality content commences and reaches the first time in the playback of the visual virtual reality content, as illustrated in Fig 9. Fig 13 schematically illustrates a viewer 1301 viewing the visual virtual reality content at the first time in the playback of the visual virtual reality content. When the viewer reaches the first time in the playback of the visual virtual reality content, the processor 112, which is continuously cycling through the method illustrated in Fig 6, determines that there is an identifier stored in the virtual reality content data 21 which identifies a region of interest 901 at the first time in the playback of the visual virtual reality content (as shown in Fig 9). At block 602 in Fig 6, the processor 112 determines that the defined proportion of the viewer's field of view coincides with the region of interest 901 at the first time in the playback of the visual virtual reality content. Consequently, at block 603 in Fig 6, the processor 112 controls advancement of the visual virtual reality content by enabling playback of the visual virtual reality content and any audio synchronized with events in the region of interest 901 to continue.

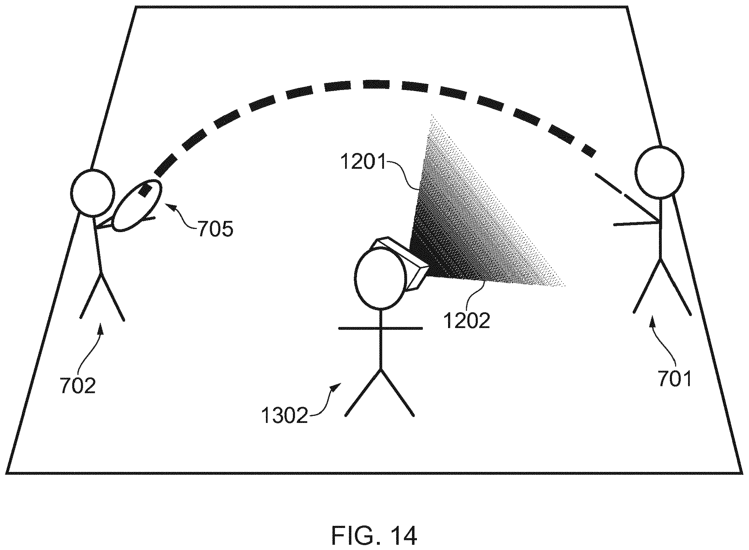

Advancement/playback of the visual virtual reality content continues and, in this example, the viewer's field of view remains directed towards the first actor 701. Fig 14 illustrates a viewer viewing the visual virtual reality content at the third time in the playback of the visual virtual reality content (as shown in Fig 11) where the ball 705 has been thrown from the first actor 701 to the second actor 702.

While the ball 705 was in midair, the first actor 701 was indicated to be a region of interest, as depicted by the dotted box 1001 in Fig 10. Thus, the processor 112 of the fourth apparatus 120 continued to allow the visual virtual reality content to advance while it was cycling through the method of Fig 6. However, at the third time (as illustrated in Fig 11), the first actor 701 is no longer a region of interest, and the only region of interest in the visual virtual reality content is the second actor 702 holding the ball 705 as indicated by the dotted box 1101 in Fig 11. The processor 112 determines that the (new) region of interest 1101 is the only region of interest at the third time in the playback of the visual virtual reality content, and monitors whether at least a defined proportion of the viewer's field of view coincides with the determined (new) region of interest 1101. However, initially, as depicted in Fig 14, the defined proportion of the viewer's field of view no longer coincides with any regions of interest at the third time in the playback of the visual virtual reality content. Consequently, in this example, at block 603 in Fig 6, the processor 112 controls advancement of the visual virtual reality content by causing advancement/playback of at least a portion of the visual virtual reality content to cease. For example, the whole of the visual virtual reality content may be paused, or merely a portion which comprises the at least one region of interest.

In some implementations, the processor 112 might not cease advancement of the visual virtual reality content instantaneously when it determines that the defined proportion of the viewer's field of view does not coincide with a region of interest. There may, for example, be a short delay before it does so and, if the defined proportion of the viewer's field of view begins to coincide with a region of interest during the delay period, advancement of visual virtual reality content is not ceased. This may help to prevent frequent pausing and recommencement of content.

The processor 112 might not cease advancement/playback of the visual virtual reality content in some implementations. Instead, it might slow down advancement/playback of the whole of the visual virtual reality content or a portion of it (such as a portion which comprises the at least one region of interest).

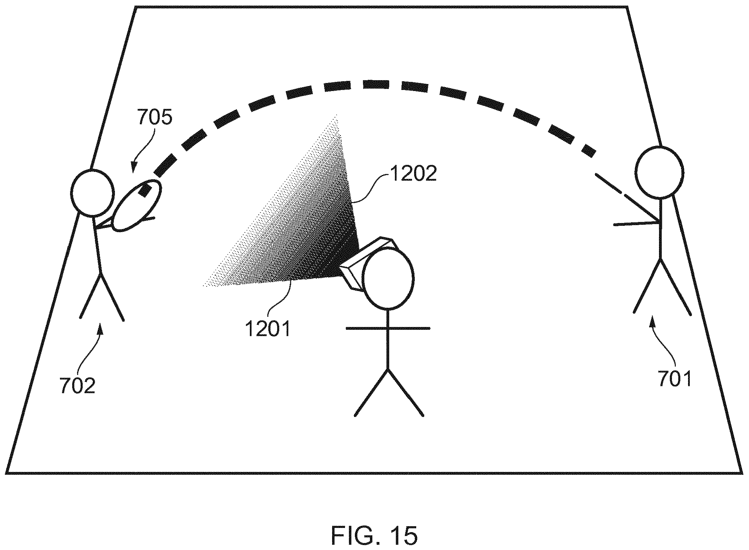

The viewer then moves his field of view such that the defined proportion of his field of view coincides with the region of interest 1101 at the third time in the playback of the visual virtual reality content, as depicted in Fig 15. The processor 112 determines that the defined proportion of the viewer's field of view now coincides with the region of interest 1101 at the third time in the playback of the visual virtual reality content and controls advancement of the visual virtual reality content by re-enabling advancement/playback of the visual virtual reality content.

In some implementations, it may not be necessary for the defined proportion of the viewer's field of view to coincide with a determined region of interest in order for the processor 112 to re-enable advancement of the visual virtual reality content. For instance, the processor 112 might be configured to monitor a trajectory of movement of the defined proportion of the viewer's field of view and to control advancement of the visual virtual reality content based on whether the defined proportion of the viewer's field of view is expected to coincide with a determined region of interest. This may be done, for instance, by interpolating the movement trajectory of the defined proportion of the viewer's field of view and determining whether the interpolated trajectory coincides with the determined region of interest.

References to 'computer-readable storage medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.
This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in Figs 5 and 6 may represent steps in a method and/or sections of code in the computer programs 17 and 18. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For example, in some implementations, the processor 112 may be configured to cause display of one or more indicators (such as one or more arrows) which indicate to a viewer where the region(s) of interest is/are at a particular time in visual virtual reality content. The processor 112 may cause the indicator(s) to appear, for instance, if advancement of the visual virtual reality content has been ceased/paused, or if it has been ceased/paused for more than a threshold period of time.

The form of the visual virtual reality content might be different from that described above. For instance, it may comprise dynamically updating information content such as one or more dynamically updating web page feeds.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method, comprising:
determining at least a first region of interest (901) at a first time in visual virtual reality content that is configured to extend beyond a viewer's field of view when viewing the visual virtual reality content;
monitoring, while a viewer (1301; 1302) is viewing the visual virtual reality content, whether a defined proportion of the viewer's field of view coincides with the first region of interest in the visual virtual reality content;
controlling advancement of the visual virtual reality content based on whether the defined proportion of the viewer's field of view coincides with the determined first region of interest in the visual virtual reality content;
determining a new second region of interest (1101), positioned outside the viewer's field of view while the viewer is viewing the visual virtual reality content, at a second time in the visual virtual reality content;
determining, while the viewer is viewing the visual virtual reality content, that the defined proportion of the viewer's field of view does not coincide with the new second region of interest in the visual virtual reality content; and
ceasing advancement of at least a portion of the visual virtual reality content, comprising the new second region of interest, based on the determination that the defined proportion of the viewer's field of view does not coincide with the new second region of interest in the visual virtual reality content.

2. The method of claim 1, wherein controlling advancement of the visual virtual reality content comprises enabling advancement of the visual virtual reality content in response to determining that the defined proportion of the viewer's field of view coincides with the first or second region of interest in the visual virtual reality content.

3. The method of claim 1 and 2, wherein controlling advancement of the visual virtual reality content comprises ceasing advancement of at least a portion of the visual virtual reality content in response to determining that the defined proportion of the viewer's field of view does not coincide with the first or second region of interest in the visual virtual reality content.

4. The method of claim 3, wherein advancement of a portion of the visual virtual reality content which comprises the first or second region of interest is ceased.

5. The method of any of the preceding claims, further comprising:
causing playback of at least one audio track to pause in response to determining that the defined proportion of the viewer's field of view does not coincide with the first region of interest in the visual virtual reality content.

6. The method of claim 5, further comprising:
enabling playback of at least one further audio track, different from the at least one audio track, when playback of the at least one audio track has been paused.

7. The method of any of the preceding claims, wherein the visual virtual reality content is virtual reality video content and controlling advancement of the visual virtual reality content comprises controlling playback of the virtual reality video content.

8. The method of any of the preceding claims, further comprising:
determining that the first region of interest is no longer a region of interest.

9. The method of any of the preceding claims, wherein the visual virtual reality content is provided by virtual reality content data (21) stored in memory and the virtual reality content data comprises a plurality of identifiers (24) that identify regions of interest in the visual virtual reality content.

10. The method of any of the preceding claims, wherein monitoring whether a defined proportion of a viewer's field of view coincides with the first or second region of interest in the visual virtual reality content comprises tracking a viewer's head movements and/or a viewer's gaze.

11. The method of any of the preceding claims, wherein the defined proportion of the viewer's field of view is the viewer's total field of view when viewing the visual virtual reality content or less than the viewer's total field of view.

12. The method of claim 11, wherein the visual virtual reality content is 360° visual virtual reality content.

13. Computer program code that, when performed by at least one processor, causes the method of any of the preceding claims to be performed.

14. An apparatus (110; 120), comprising:
means (112, 114, 117, 118) for determining at least a first region of interest in visual virtual reality content that is configured to extend beyond a viewer's field of view when viewing the visual virtual reality content;
means (112, 114, 117, 118) for monitoring, while a viewer is viewing the visual virtual reality content, whether a defined proportion of a viewer's field of view coincides with the first region of interest in the visual virtual reality content; and
means (112, 114, 117, 118) for controlling advancement of the visual virtual reality content based on whether the at least a defined portion of the viewer's field of view coincides with the determined at least one region of interest in the visual virtual reality content;
means (112, 114, 117, 118) for determining a new second region of interest, positioned outside the viewer's field of view while the viewer is viewing the visual virtual reality content, at a second time in the visual virtual reality content;
means (112, 114, 117, 118) for determining, while the viewer is viewing the visual virtual reality content, that the defined proportion of the viewer's field of view does not coincide with the new second region of interest in the visual virtual reality content; and
means (112, 114, 117, 118) for ceasing advancement of at least a portion of the visual virtual reality content, comprising the new second region of interest, based on the determination that the defined proportion of the viewer's field of view does not coincide with the new second region of interest in the visual virtual reality content.

15. The apparatus of claim 14, further comprising means (112, 114, 117, 118) for performing the method of one or more of claims 2 to 12.

## Patentansprüche

1. Verfahren, das umfasst:
Ermitteln mindestens einer ersten interessierenden Region (901) zu einem ersten Zeitpunkt in einem Visuelle-Virtuelle-Realität-Inhalt, der so ausgeführt ist, dass er sich über das Sichtfeld eines Betrachters hinaus erstreckt, wenn dieser den Visuelle-Virtuelle-Realität-Inhalt betrachtet;
Überwachen, während ein Betrachter (1301, 1302) den Visuelle-Virtuelle-Realität-Inhalt betrachtet, ob ein definierter Anteil des Sichtfelds des Betrachters mit der ersten interessierenden Region in dem Visuelle-Virtuelle-Realität-Inhalt zusammenfällt;
Steuern der Vorwärtsbewegung des Visuelle-Virtuelle-Realität-Inhalts basierend darauf, ob der definierte Anteil des Sichtfelds des Betrachters mit der ermittelten ersten interessierenden Region in dem Visuelle-Virtuelle-Realität-Inhalt zusammenfällt;
Ermitteln einer neuen zweiten interessierenden Region (1101), die außerhalb des Sichtfelds des Betrachters positioniert ist, während der Betrachter den Visuelle-Virtuelle-Realität-Inhalt betrachtet, zu einem zweiten Zeitpunkt in dem Visuelle-Virtuelle-Realität-Inhalt;
Ermitteln, während der Betrachter den Visuelle-Virtuelle-Realität-Inhalt betrachtet, dass der definierte Anteil des Sichtfelds des Betrachters nicht mit der neuen zweiten interessierenden Region in dem Visuelle-Virtuelle-Realität-Inhalt zusammenfällt; und
Beenden der Vorwärtsbewegung zumindest eines Teils des Visuelle-Virtuelle-Realität-Inhalts, der die neue zweite interessierende Region umfasst, auf der Basis der Ermittlung, dass der definierte Anteil des Sichtfelds des Betrachters nicht mit der neuen zweiten interessierenden Region in dem Visuelle-Virtuelle-Realität-Inhalt zusammenfällt.

2. Verfahren nach Anspruch 1, wobei das Steuern der Vorwärtsbewegung des Visuelle-Virtuelle-Realität-Inhalts das Aktivieren der Vorwärtsbewegung des Visuelle-Virtuelle-Realität-Inhalts in Reaktion auf das Ermitteln, dass der definierte Anteil des Sichtfelds des Betrachters mit der ersten oder der zweiten interessierenden Region in dem Visuelle-Virtuelle-Realität-Inhalt zusammenfällt, umfasst.

3. Verfahren nach Anspruch 1 und 2, wobei das Steuern der Vorwärtsbewegung des Visuelle-Virtuelle-Realität-Inhalts das Beenden der Vorwärtsbewegung zumindest eines Teils des Visuelle-Virtuelle-Realität-Inhalts in Reaktion auf das Ermitteln, dass der definierte Anteil des Sichtfelds des Betrachters nicht mit der ersten oder der zweiten interessierenden Region in dem Visuelle-Virtuelle-Realität-Inhalt zusammenfällt, umfasst.

4. Verfahren nach Anspruch 3, wobei die Vorwärtsbewegung eines Teils des Visuelle-Virtuelle-Realität-Inhalts, der die erste oder die zweite interessierende Region umfasst, beendet wird.

5. Verfahren nach einem der vorhergehenden Ansprüche, das ferner umfasst:
Bewirken, dass die Wiedergabe mindestens einer Audiospur in Reaktion auf das Ermitteln, dass der definierte Anteil des Sichtfelds des Betrachters nicht mit der ersten interessierenden Region in dem Visuelle-Virtuelle-Realität-Inhalt zusammenfällt, pausiert.

6. Verfahren nach Anspruch 5, das ferner umfasst:
Aktivieren der Wiedergabe mindestens einer weiteren Audiospur, die sich von der mindestens einen Audiospur unterscheidet, wenn die Wiedergabe der mindestens einen Audiospur pausiert hat.

7. Verfahren nach einem der vorhergehenden Ansprüche, wobei der Visuelle-Virtuelle-Realität-Inhalt ein Virtuelle-Realität-Videoinhalt ist und das Steuern der Vorwärtsbewegung des Visuelle-Virtuelle-Realität-Inhalts das Steuern der Wiedergabe des Virtuelle-Realität-Videoinhalts umfasst.

8. Verfahren nach einem der vorhergehenden Ansprüche, das ferner umfasst:
Ermitteln, dass die erste interessierende Region nicht länger eine interessierende Region ist.

9. Verfahren nach einem der vorhergehenden Ansprüche, wobei der Visuelle-Virtuelle-Realität-Inhalt von Virtuelle-Realität-Inhalt-Daten (21) bereitgestellt wird, die in einem Speicher gespeichert sind, und die Virtuelle-Realität-Inhalt-Daten eine Vielzahl von Identifizierern (24) umfassen, die interessierende Regionen in dem Visuelle-Virtuelle-Realität-Inhalt identifizieren.

10. Verfahren nach einem der vorhergehenden Ansprüche, wobei das Überwachen, ob ein definierter Anteil eines Sichtfelds des Betrachters mit der ersten oder der zweiten interessierenden Region in dem Visuelle-Virtuelle-Realität-Inhalt zusammenfällt, eine Nachverfolgung der Kopfbewegungen des Betrachters und/oder des Blicks des Betrachters umfasst.

11. Verfahren nach einem der vorhergehenden Ansprüche, wobei der definierte Anteil des Sichtfelds des Betrachters das gesamte Sichtfeld des Betrachters ist, wenn dieser den Visuelle-Virtuelle-Realität-Inhalt betrachtet, oder weniger als das gesamte Sichtfeld des Betrachters ist.

12. Verfahren nach Anspruch 11, wobei der Visuelle-Virtuelle-Realität-Inhalt ein 360°-Visuelle-Virtuelle-Realität-Inhalt ist.

13. Computerprogrammcode, der bei Ausführung durch mindestens einen Prozessor bewirkt, dass das Verfahren nach einem der vorhergehenden Ansprüche ausgeführt wird.

14. Vorrichtung (110; 120), die umfasst:
eine Einrichtung (112, 114, 117, 118) zum Ermitteln mindestens einer ersten interessierenden Region in einem Visuelle-Virtuelle-Realität-Inhalt, der so ausgeführt ist, dass er sich über das Sichtfeld eines Betrachters hinaus erstreckt, wenn dieser den Visuelle-Virtuelle-Realität-Inhalt betrachtet;
eine Einrichtung (112, 114, 117, 118) zum Überwachen, während ein Betrachter den Visuelle-Virtuelle-Realität-Inhalt betrachtet, ob ein definierter Anteil des Sichtfelds eines Betrachters mit der ersten interessierenden Region in dem Visuelle-Virtuelle-Realität-Inhalt zusammenfällt; und
eine Einrichtung (112, 114, 117, 118) zum Steuern der Vorwärtsbewegung des Visuelle-Virtuelle-Realität-Inhalts basierend darauf, ob zumindest der definierte Teil des Sichtfelds des Betrachters mit der ermittelten mindestens einen interessierenden Region in dem Visuelle-Virtuelle-Realität-Inhalt zusammenfällt;
eine Einrichtung (112, 114, 117, 118) zum Ermitteln einer neuen zweiten interessierenden Region, die außerhalb des Sichtfelds des Betrachters positioniert ist, während der Betrachter den Visuelle-Virtuelle-Realität-Inhalt betrachtet, zu einem zweiten Zeitpunkt in dem Visuelle-Virtuelle-Realität-Inhalt;
eine Einrichtung (112, 114, 117, 118) zum Ermitteln, während der Betrachter den Visuelle-Virtuelle-Realität-Inhalt betrachtet, dass der definierte Anteil des Sichtfelds des Betrachters nicht mit der neuen zweiten interessierenden Region in dem Visuelle-Virtuelle-Realität-Inhalt zusammenfällt; und
eine Einrichtung (112, 114, 117, 118) zum Beenden der Vorwärtsbewegung zumindest eines Teils des Visuelle-Virtuelle-Realität-Inhalts, der die neue zweite interessierende Region umfasst, auf der Basis der Ermittlung, dass der definierte Anteil des Sichtfelds des Betrachters nicht mit der neuen zweiten interessierenden Region in dem Visuelle-Virtuelle-Realität-Inhalt zusammenfällt.

15. Vorrichtung nach Anspruch 14, die ferner eine Einrichtung (112, 114, 117, 118) zum Ausführen des Verfahrens nach einem oder mehreren der Ansprüche 2 bis 12 umfasst.

## Revendications

1. Procédé, comprenant les étapes suivantes :
déterminer au moins une première région d'intérêt (901) à un premier moment dans un contenu visuel de réalité virtuelle qui est configurée pour s'étendre au-delà du champ de vision d'un spectateur lorsqu'il regarde le contenu visuel de réalité virtuelle ;
surveiller, pendant qu'un spectateur (1301 ; 1302) regarde le contenu visuel de réalité virtuelle, si une proportion définie du champ de vision du spectateur coïncide avec la première région d'intérêt dans le contenu visuel de réalité virtuelle ;
contrôler la progression du contenu visuel de réalité virtuelle selon que la proportion définie du champ de vision du spectateur coïncide avec la première région d'intérêt déterminée dans le contenu visuel de réalité virtuelle ;
déterminer une nouvelle deuxième région d'intérêt (1101), positionnée à l'extérieur du champ de vision du spectateur pendant que le spectateur regarde le contenu visuel de réalité virtuelle, à un deuxième moment dans le contenu visuel de réalité virtuelle ;
déterminer, pendant que le spectateur regarde le contenu visuel de réalité virtuelle, que la proportion définie du champ de vision du spectateur ne coïncide pas avec la nouvelle deuxième région d'intérêt dans le contenu visuel de réalité virtuelle ; et
interrompre la progression d'au moins une partie du contenu visuel de réalité virtuelle, comprenant la nouvelle deuxième région d'intérêt, sur la base de la détermination que la proportion définie du champ de vision du spectateur ne coïncide pas avec la nouvelle deuxième région d'intérêt dans le contenu visuel de réalité virtuelle.

2. Procédé de la revendication 1, dans lequel le contrôle de la progression du contenu visuel de réalité virtuelle comprend l'étape consistant à autoriser la progression du contenu visuel de réalité virtuelle en réponse à la détermination que la proportion définie du champ de vision du spectateur coïncide avec la première ou deuxième région d'intérêt dans le contenu visuel de réalité virtuelle.

3. Procédé de la revendication 1 et 2, dans lequel le contrôle de la progression du contenu visuel de réalité virtuelle comprend l'étape consistant à interrompre la progression d'au moins une partie du contenu visuel de réalité virtuelle en réponse à la détermination que la proportion définie du champ de vision du spectateur ne coïncide pas avec la première ou deuxième région d'intérêt dans le contenu visuel de réalité virtuelle.

4. Procédé de la revendication 3, dans lequel la progression d'une partie du contenu visuel de réalité virtuelle qui comprend la première ou deuxième région d'intérêt est interrompue.

5. Procédé de l'une quelconque des revendications précédentes, comprenant en outre l'étape suivante :
mettre en pause la lecture d'au moins une piste audio en réponse à la détermination que la proportion définie du champ de vision du spectateur ne coïncide pas avec la première région d'intérêt dans le contenu visuel de réalité virtuelle.

6. Procédé de la revendication 5, comprenant en outre l'étape suivante :
autoriser la lecture d'au moins une autre piste audio, différente de l'au moins une piste audio, quand la lecture de l'au moins une piste audio a été mise en pause.

7. Procédé de l'une quelconque des revendications précédentes, dans lequel le contenu visuel de réalité virtuelle est un contenu vidéo de réalité virtuelle et le contrôle de la progression du contenu visuel de réalité virtuelle comprend le contrôle de la lecture du contenu vidéo de réalité virtuelle.

8. Procédé de l'une quelconque des revendications précédentes, comprenant en outre l'étape suivante :
déterminer que la première région d'intérêt n'est plus une région d'intérêt.

9. Procédé de l'une quelconque des revendications précédentes, dans lequel le contenu visuel de réalité virtuelle est fourni par des données de contenu de réalité virtuelle (21) stockées dans une mémoire et les données de contenu de réalité virtuelle comprennent une pluralité d'identifiants (24) qui identifient des régions d'intérêt dans le contenu visuel de réalité virtuelle.

10. Procédé de l'une quelconque des revendications précédentes, dans lequel l'étape consistant à surveiller si une proportion définie du champ de vision d'un spectateur coïncide avec la première ou deuxième région d'intérêt dans le contenu visuel de réalité virtuelle comprend le suivi des mouvements de la tête d'un spectateur et/ou du regard d'un spectateur.

11. Procédé de l'une quelconque des revendications précédentes, dans lequel la proportion définie du champ de vision du spectateur est le champ de vision total du spectateur quand il regarde le contenu visuel de réalité virtuelle ou moins que le champ de vision total du spectateur.

12. Procédé de la revendication 11, dans lequel le contenu visuel de réalité virtuelle est un contenu visuel de réalité virtuelle à 360°.

13. Code de programme informatique qui, lorsqu'il est exécuté par au moins un processeur, amène le procédé de l'une quelconque des revendications précédentes à être mis en oeuvre.

14. Appareil (110 ; 120) comprenant :
un moyen (112, 114, 117, 118) pour déterminer au moins une première région d'intérêt dans un contenu visuel de réalité virtuelle qui est configurée pour s'étendre au-delà du champ de vision d'un spectateur lorsqu'il regarde le contenu visuel de réalité virtuelle ;
un moyen (112, 114, 117, 118) pour surveiller, pendant qu'un spectateur regarde le contenu visuel de réalité virtuelle, si une proportion définie du champ de vision d'un spectateur coïncide avec la première région d'intérêt dans le contenu visuel de réalité virtuelle ;
un moyen (112, 114, 117, 118) pour contrôler la progression du contenu visuel de réalité virtuelle selon que l'au moins une partie définie du champ de vision du spectateur coïncide avec l'au moins une région d'intérêt déterminée dans le contenu visuel de réalité virtuelle ;
un moyen (112, 114, 117, 118) pour déterminer une nouvelle deuxième région d'intérêt, positionnée à l'extérieur du champ de vision du spectateur pendant que le spectateur regarde le contenu visuel de réalité virtuelle, à un deuxième moment dans le contenu visuel de réalité virtuelle ;
un moyen (112, 114, 117, 118) pour déterminer, pendant que le spectateur regarde le contenu visuel de réalité virtuelle, que la proportion définie du champ de vision du spectateur ne coïncide pas avec la nouvelle deuxième région d'intérêt dans le contenu visuel de réalité virtuelle ; et
un moyen (112, 114, 117, 118) pour interrompre la progression d'au moins une partie du contenu visuel de réalité virtuelle, comprenant la nouvelle deuxième région d'intérêt, sur la base de la détermination que la proportion définie du champ de vision du spectateur ne coïncide pas avec la nouvelle deuxième région d'intérêt dans le contenu visuel de réalité virtuelle.

15. Appareil de la revendication 14, comprenant en outre un moyen (112, 114, 117, 118) pour mettre en oeuvre le procédé d'une ou plusieurs des revendications 2 à 12.
